# EUROPÄISCHE PATENTANMELDUNG

(11) **EP 1 447 538 A2**
(43) Veröffentlichungstag der Anmeldung: **18.08.2004**
(21) Anmeldenummer: 03006969.4
(22) Anmeldetag: 27.03.2003
(51) Int. Cl.: F01N 7/00

(54) **Auspuff Reparatursatz**

(30) Priorität: 13.02.2003 AT 2172003
(71) Anmelder: Reiterits, Matthias, 7322 Lackenbach (AT)
(72) Erfinder: Reiterits, Matthias, 7322 Lackenbach (AT)

(57) **Zusammenfassung**

1) Verpackter Reparatursatz für Auspuffanlagen aller internationaler die in Handel verfügbaren Auspuffanlagen.
2) Die Materialien die zur Reparatur der Auspuffanlage notwendig sind:
   a) Stallwolle
      Draht
      Alumetallklebeband
      nicht brennbar.
   b) Alle Materialien sind in Handel Verfügbar.
3) Die Figur I zeigt die Verwendung der Materialien.
4) Die Figur II zeigt die Verpackung der Materialien.

## Beschreibung

1) Die Erfindung bezieht sich auf einen Auspuff Reparatursatz für alle bestehenden Auspuffe der an Märkten zugelassenen Typen.
2) Durch die hohe Beanspruchung des Auspuffes bei Witterungseinflüsse ob Regen, Schnee, Salzstreuung , Steinschläge, Beschädigung bei Hindernisse auf Straßen oder Wegen, entstehen Reparaturarbeiten an der Auspuffanlage.
   Der Rost sowie die Abnützung des Metalls, sollten und müssten um die Anlagegeräusche auch dichtungsfest herzustellen um umweltfreundlich zu arbeiten.
   Die entstehenden Arbeiten können in verschiedenen Arbeitsgängen durchgeführt werden.
   Neuanlage die oft durch die hohen Kosten noch hinausgeschoben werden können.
   Bei Schweissarbeiten werden durch die hohe Wärmeentwicklung noch größere Schäden entstehen, und sind unreperabel.
   Somit kann man mit den Auspuff Reparatursatz diese Schäden kostengünstig herstellen, damit eine vorgeschriebenen Anlage gegeben ist.
3) Die Erfindung liegt daran, dass man die richtigen Produkte die am Markt vorhanden sind richtig zusammenstellt, um eine Raparatur der Auspuffanlage vornehmen zu können.
4) Die Erfindung löst diese Aufgabe damit, dass 3 Produkte in folgender Reihenfolge durchgeführt werden sollen.
   Die Stahllwolle handelsübliche Erzeugnisse mit einer bestimmten Dichte die sich von 000 - 5 ergibt, sowie mit einem weichen Draht, handelsübliche Erzeugnisse von zirka einer Stärke von 1-2 mm. Zur absoluten Festigkeit und Dichte wird ein Alumetallband von einer Breite von zirka 2 - 10 cm verwendet. Das Material des Alumetallklebebandes ist auch auf den internationalen Märkten handeslüblich vorhanden. Beispiele Fa.Tesa u.s.w..
   Alle drei Produkte sind weder brennbar, noch lösen sie sich durch die große Hitzeentwicklung , durch Straßenschmutz sowie durch die Ausscheidungsrückstände des Auspuffes auf,oder brennen.
5) Die Bedienungsanleitung ist relativ einfach. Siehe Anleitung auf den Beiblatt. Kann auch von Nichtfachleuten durchgeführt werden, ohne das unsachgemäße Durchführung der Arbeit , Schaden an Mensch und Material entstehen kann.

- **Bedienungsanleitung:**: Sie formen von der Stahlwolle einen Pfropfen je nach Grösse des Schadens.
- Bei Töpfe:: Länge 6-8 cm, so stark es geht die Stahlwolle in das Loch des Auspufftopfes pressen. Die restlichen 2 - 4 cm drücken Sie flach, somit entsteht ein Schwammerl das Sie mit den Draht einigemale umwickeln damit der Pfropfen durch den Druck sich nicht lösen kann, das auch bei Abnützung des Materials der Auspuffanlage noch einen Durchmesser von 2 cm abdeckt.
- Rohre:: Länge 2 - 3 cm, das Leck im Rohr mit der Stahlwolle ausstopfen, flachpressen, somit entsteht ein Schwammerl, dass Sie mit den Draht einigemale umwickeln damit der Pforpfen durch den Druck sich nicht lösen kann. Das Alumetallklebeband über Stahlwolle und Draht kleben.
- **Der Reparatursatz:**: besteht aus Stahlwolle und Alumetallklebeband. Das Material ist weder brennbar, noch löst es sich auf.
- **Verpackung:**: Stahlwolle und Draht, sowie Alumetallklebeband in einer Größe von B - 6.5 cm Höhe 9 cm verpackt in einen Nylonsackerl, darüber ein bedruckter Karton L- 13 cm, mit einer 4 cm hohen Aufhängevorrichtung (verlängerter Karton ) mit für internationalen Schlitz für Verkaufstellage.
Auf Verpackung ist die Firma, Werbeaufschrift sowie Betriebsanleitung angegeben.
Die Farbe der Verpackung ist in der jeweiligen Farbe der Werbung gegeben.

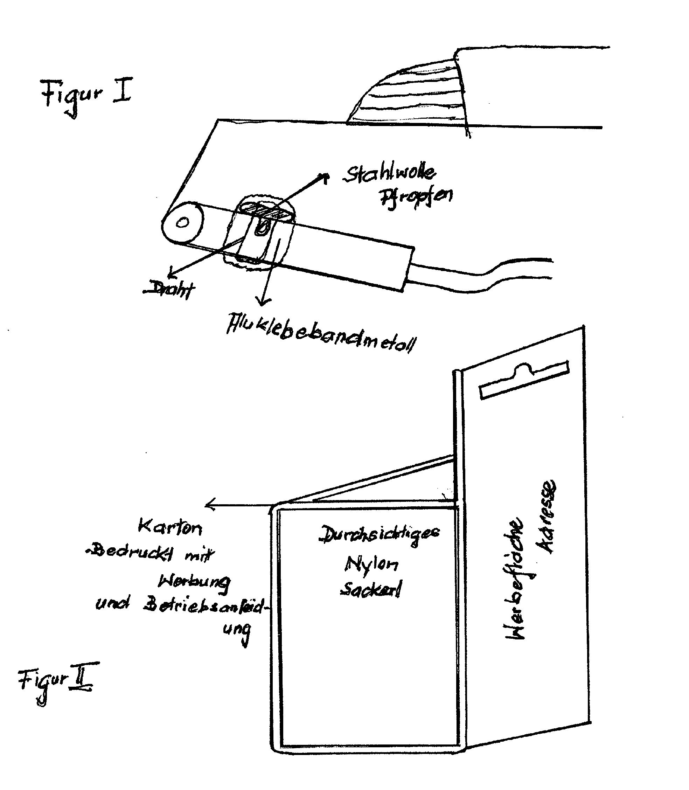

## Patentansprüche

1. Verpackter Reparatur Satz für Auspuffanlagen aller internationaler die in Handel verfügbaren aus Metall oder anderer Produkte von Auspuffanlagen **dadurch gekennzeichnet**.

2. Die Materialien die zur Reparatur der Auspuffanlagen notwendig sind,
Stahlwolle: Alle Materialien sind in Handel.
Draht: International verfügbar.
Alumetallklebeband: **dadurch gekennzeichnet**.

3. Die Aufgabe der Erfindung ist Einsetzung von verschiedenen Materialien um eine kostengünstige Reparatur vornehmen zu können. **Dadurch gekennzeichnet**.

4. Durch die Einsetzung der in Punkt 2 angegebenen Materialien so zu verwenden in der Reihenfolge
a) Stahlwohle **dadurch gekennzeichnet**
b) Draht
c) Alumetallklebeband für gebraucht oder neue Auspuffanlagen.

5. Der Erfindungsgegenstand ist die Zusammensetzung verschiedener Materialien sowie Stahlwolle in der gewünschten Stärke, weich biegsammer Draht, sowie Alumetallklebeband. **Dadurch gekennzeichnet**.

6. Zur Erläuterung der Figuren.
Auspuff Leck, Stahlwolle, Pfopfen, sowie Halterung durch biegsamen Draht Stärke 1-3 mm zur doppelter Sicherung des Alumetallklebebandes, dass auch als optische Verschönerung vorgesehen ist. **Dadurch gekennzeichnet**.

7. Die Verpackung ist in einen durchsichtigen Nylonsackerl um die Sicht desMaterial
zu erleichtern, mit Karton umhüllt, wo Werbung,Adresse,Betriebsanleitung , sowie Aufhängeschlitz vorgesehen ist. **Dadurch gekennzeichnet**.

8. Die Ansprüche des Auspuffreparatur Satzes soll eine schnelle und kostengünstige Reparatur mit den angegebenen Materialien und einfach für jeden ungeübten oder Fachmann sein. **Dadurch gekennzeichnet**.
